# EUROPÄISCHE PATENTSCHRIFT

(11) **EP 3 769 906 B1**
(45) Veröffentlichungstag und Bekanntmachung des Hinweises auf die Patenterteilung: **02.02.2022**
(21) Anmeldenummer: 19188413.9
(22) Anmeldetag: 25.07.2019
(51) Int. Cl.: B23P 21/00, B62D 65/02, B23K 37/04, B25H 1/00

(54) **VERFAHREN UND VORRICHTUNG ZUR PRODUKTION VON KRAFTFAHRZEUGEN**
METHOD AND DEVICE FOR PRODUCING MOTOR VEHICLES
PROCÉDÉ ET DISPOSITIF DE FABRICATION DE VÉHICULES AUTOMOBILES

(43) Veröffentlichungstag der Anmeldung: 27.01.2021
(73) Patentinhaber: MAGNA STEYR Fahrzeugtechnik AG & Co KG, 8041 Graz (AT)
(72) Erfinder: KRIBERNEGG, Christoph, 8451 Leibnitz (AT); LEONHARDSBERGER, Patrick, 8045 Graz (AT); PICHLER, Manfred, 8010 Graz (AT); GFOELLNER, Michael, 8010 Graz (AT)
(74) Vertreter: Zangger, Bernd

(56) Entgegenhaltungen:
- CN-A- 105 882 789
- DE-A1- 19 820 094
- DE-U1-202017 102 155
- JP-A- H05 277 848
- KR-A- 20030 005 855
- US-A1- 2018 273 243

## Beschreibung

### Gebiet der Erfindung

Die vorliegende Erfindung betrifft ein Verfahren zur Produktion von Kraftfahrzeugen mittels einer Vorrichtung zum Positionieren von Kraftfahrzeugteilen gemäß dem Oberbegriff des Anspruchs 1 und eine Vorrichtung zur Produktion von Kraftfahrzeugen umfassend eine Vorrichtung zum Positionieren von Kraftfahrzeugteilen gemäß dem Oberbegriff des Anspruchs 6.

### Stand der Technik

Die automatisierte Produktion von Kraftfahrzeugen ist heute hinlänglich bekannt. Insbesondere Karosserieteile und/oder Fahrgestellteile werden üblicherweise entlang einer Produktionsstraße in verschiedenen Arbeitsstationen mit weiteren Anbauteilen ausgestattet oder zu größeren Fahrzeugmodulen zusammengesetzt. Dabei ist es zunehmend erforderlich, unterschiedliche Kraftfahrzeugtypen mit möglichst geringem zeitlichem Abstand in den selben Arbeitsstationen herstellen zu können. Für die Herstellung unterschiedlicher Kraftfahrzeugtypen ist üblicherweise ein Umbau der Arbeitsstation erforderlich. Da die Teile unterschiedlicher Kraftfahrzeugtypen meist unterschiedliche Geometrie aufweisen, müssen beispielsweise Positionier- und Haltevorrichtungen für die Kraftfahrzeugteile umgebaut oder ausgewechselt werden.

Die DE 198 20 094 A1 offenbart beispielsweise eine Anlage zum Positionieren und Verschweißen von Karosserieteilen unterschiedlicher Kfz-Typen mit einem auf einer Förderbahn geführten Montagerahmen, der Aufnahmen für zumindest einige Karosserieteile aufweist, mit Positioniereinrichtungen für die Karosserieteile und mit wenigstens einem für Schweißarbeiten einsetzbaren Roboter, wobei der Montagerahmen Positioniereinrichtungen für zumindest einige Karosserieteile und von außen betätigbare Spanneinrichtungen für die Karosserieteile aufweist, wobei unter der Förderbahn eine weitere Förderbahn angeordnet ist, auf der jeweils einer von mehreren Montagehilfsrahmen geführt ist, wobei neben der unteren Förderbahn Parkpositionen für die Montagehilfsrahmen vorgesehen sind, wobei die Montagehilfsrahmen jeweils Aufnahmen für weitere Karosserieteile unterschiedlicher Kfz-Typen sowie Einrichtungen zum Positionieren und Verspannen mit dem Montagerahmen aufweisen und wobei eine Hubvorrichtung für den Montagehilfsrahmen vorgesehen ist.

Die CN 105 882 789 A offenbart eine gleitende Wechselvorrichtung und ein Wechselverfahren für eine Produktionslinie, um die Position einer Positionierungsvorrichtung einzustellen, um die Anforderungen der Produktion verschiedener Arten von Produkten zu erfüllen, einschließlich eines oberen Sitzkörpers und eines unteren Sitzkörpers. Der untere Sitzkörper ist am Boden der Produktionslinie befestigt, der obere Sitzkörper ist abnehmbar auf dem unteren Sitzkörper montiert. Eine Positionierungsklammer ist auf dem oberen Sitzkörper montiert und enthält außerdem einen Verriegelungsmechanismus, wobei der Verriegelungsmechanismus zwischen dem oberen Sitzkörper und dem unteren Sitzkörper angeordnet ist, für schnelles Verklemmen oder Lösen des oberen oder unteren Sitzkörpers.

Aus der DE 20 2017 102155 U1 ist eine automatische Fertigungsstation für Werkstücke, insbesondere für Karosseriebauteile, bekannt, die einen von einer Schutzabtrennung umgebenen Fertigungsbereich mit mehreren programmgesteuerten Fertigungsrobotern aufweist, wobei die Werkstücke der Fertigungsstation auf Produktionsladungsträgern von extern zugeführt werden, wobei die Fertigungsstation ein stationsgebundenes Transportmittel für einen Transport der Produktionsladungsträger innerhalb der Fertigungsstation und eine Ladestation mit einem Laderoboter zum Umladen von Produktionsladungsträgern zwischen einem externen Fördermittel und dem stationsgebundenen Transportmittel aufweist.

Die US 2018/273243 A1 lehrt eine modulares, rekonfigurierbares Montagepalettensystem zur Verwendung beim Tragen und Transportieren eines teilweise montierten Produkts entlang einer Montagelinie, wobei die Montagepalette folgendes umfasst: eine universelle Trägerpalette mit einer Vielzahl von Aufnahmen; und eine modulare Platte, die selektiv und abnehmbar mit der Trägerpalette in Eingriff steht, wobei die modulare Platte ferner umfasst: eine Platte; eine Steigleitung, die mit der Platte in einer vorbestimmten X- und Y-Koordinatenposition verbunden ist, die für ein erstes Produkt relativ zur Platte entlang einer X-, Y- und Z-Koordinatenrichtung spezifisch ist, wobei die Steigleitung einen Positionierungsstift enthält; und eine Vielzahl von Plattenpositionierern, die mit der Platte verbunden sind, wobei jeder Plattenpositionierer selektiv und abnehmbar mit einem jeweiligen der Vielzahl von Aufnahmen in Eingriff kommt, wenn die modulare Platte mit der Trägerpalette in Eingriff gebracht wird, wobei die abnehmbar in Eingriff stehenden Plattenpositionierer und die jeweiligen Aufnahmen so betreibbar sind, dass sie den Positionierstift des Steigers in einer vorbestimmten X-, Y- und Z-Koordinatenposition positionieren und sichern, die für das erste Produkt spezifisch ist.

Die US 2018/273243 A1 offenbart die Merkmale der Oberbegriffe der unabhängigen Ansprüche 1 und 6.

### Zusammenfassung der Erfindung

Es ist eine Aufgabe der Erfindung, ein effizientes Verfahren zur Produktion von Kraftfahrzeugen anzugeben, das eine einfache und rasche Umstellung auf verschiedene Fahrzeugtypen erlaubt. Eine weitere Aufgabe der Erfindung ist es eine Vorrichtung anzugeben, die ein solches effizientes Verfahren zur Produktion von Kraftfahrzeugen ermöglicht.

Die Lösung der Aufgabe erfolgt durch ein Verfahren zur Produktion von Kraftfahrzeugen mit den Merkmalen gemäß Anspruch 1.

Vorteilhafte Varianten des Verfahrens sind Gegenstand der abhängigen Ansprüche.

Ein erfindungsgemäßes Verfahren zur Produktion von Kraftfahrzeugen mit Hilfe einer Vorrichtung zum Positionieren von Kraftfahrzeugteilen, umfassend einen Grundrahmen, zumindest ein am Grundrahmen angeordnetes Grundmodul, sowie Aufnahmen, die dazu ausgebildet sind, die Kraftfahrzeugteile zu halten, wobei die Vorrichtung zumindest eine austauschbare Dockingplatte umfasst, wobei die Dockingplatte im Grundmodul fixierbar ist, wobei die Aufnahmen an der Dockingplatte ausgebildet sind, umfasst die Schritte:
- Zuführen einer Dockingplatte zu einem mit zumindest einem Grundmodul ausgestatteten Grundrahmen und Fixieren der Dockingplatte auf dem Grundmodul in einer Konfigurationsstation,
- Aufsetzen eines Kraftfahrzeugteiles auf die Dockingplatte, so dass das Kraftfahrzeugteil durch die Aufnahmen der Dockingplatte gehalten wird in einer Arbeitsstation und
- Ausstatten des Kraftfahrzeugteiles mit Anbauteilen.

Erfindungsgemäß wird zur Produktion von Kraftfahrzeugen eine Vorrichtung verwendet, die austauschbare Dockingplatten umfasst, wobei Kraftfahrzeugteile, insbesondere Karosserien oder Karosserieteile, auf den Dockingplatten gehalten werden. Dabei können auf einem selben Grundrahmen unterschiedliche Dockingplatten aufgesetzt werden zum Bau unterschiedlicher Kraftfahrzeugtypen.

Das Halten der Kraftfahrzeugteile zur weiteren Bearbeitung erfolgt mittels Aufnahmen, die üblicherweise genau auf die aufzunehmenden Kraftfahrzeugteile abgestimmt sind und somit kraftfahrzeugtypabhängig ausgebildet sind. Diese Aufnahmen werden aber nicht direkt beispielsweise an einen Rahmen einer Arbeitsstation bzw. Vorrichtung befestigt, sondern vielmehr an einer austauschbaren Dockingplatte, also einem im wesentlichen plattenförmigen Element, das auf einfache Weise, bevorzugt auch automatisiert, mittels Greifsystemen bzw. Robotern, in einem Grundmodul fixierbar ist, befestigt. Zur Herstellung eines unterschiedlichen Kraftfahrzeugtyps kann daher auf einfache Weise und insbesondere automatisiert die Dockingplatte der Vorrichtung gewechselt werden, so dass auch neue, passende Aufnahmen für die neuen Kraftfahrzeugteile bereitgestellt werden.

Bei einem erfindungsgemäßen Verfahren zur Produktion von Kraftfahrzeugen wird eine Dockingplatte zu einem mit zumindest einem Grundmodul ausgestatteten Grundrahmen zugeführt und die Dockingplatte auf dem Grundmodul am Grundrahmen fixiert. Die Bestückung des Grundrahmens bzw. des Grundmoduls auf dem Grundrahmen mit der Dockingplatte erfolgt in einer Konfigurationsstation.

In einer üblicherweise von der Konfigurationsstation räumlich getrennten Arbeitsstation wird ein Kraftfahrzeugteil, insbesondere eine Karosserie oder ein Karosserieteil, auf die Dockingplatte aufgesetzt, so dass das Kraftfahrzeugteil durch die Aufnahmen der Dockingplatte gehalten wird.

Daraufhin wird das Kraftfahrzeugteil mit Anbauteilen ausgestattet, um das herzustellende Kraftfahrzeug zu ergänzen oder fertigzustellen. Das Ausstatten mit Anbauteilen kann bevorzugt in der selben Arbeitsstation erfolgen, wie das Aufsetzen des Kraftfahrzeugteils.

Durch dieses Verfahren zur Produktion von Kraftfahrzeugen können dieselben Grundrahmen und dieselben Grundmodule für die Herstellung verschiedener Kraftfahrzeugtypen verwendet werden. Die Grundrahmen müssen daher beispielsweise nicht bei einer Umrüstung auf einen anderen Fahrzeugtyp entsorgt werden. Vielmehr müssen lediglich in einer Konfigurationsstation geeignete Dockingplatten auf die Grundrahmen und die Grundmodule aufgesetzt werden. Die Grundrahmen sind daher wiederverwendbar. Geeignete Dockingmodule für verschiedene Fahrzeugtypen können platzsparend gelagert und bei Bedarf bereitgestellt werden.

Im Folgenden wird die Vorrichtung zur Durchführung des Verfahrens, nämlich die Vorrichtung zum Positionieren von Kraftfahrzeugteilen genauer erläutert.

Bevorzugt ist die Dockingplatte im Grundmodul positionsgenau und / oder toleranzgenau fixierbar bzw. fixiert.

Bevorzugt umfasst die Dockingplatte Bolzen, insbesondere Einzugsspannbolzen, wobei die Dockingplatte mittels der Bolzen im Grundmodul positionsgenau fixiert ist. Besonders bevorzugt umfasst die Dockingplatte zwei oder vier Bolzen bzw. Einzugsspannbolzen, die insbesondere im Bereich der Ecken einer viereckigen Dockingplatte angebracht sein können. Die Bolzen sind bevorzugt in Verwendungslage an der Unterseite der Dockingplatte ausgebildet und stehen bevorzugt vertikal nach unten ab.

Das Grundmodul umfasst vorzugsweise zumindest eine Spannvorrichtung, besonders bevorzugt eine Nullpunktspannvorrichtung und /oder eine Verriegelungseinrichtung, die dazu ausgebildet ist Bolzen, insbesondere Einzugsspannbolzen, einzuspannen und / oder auf sonstige Weise die Dockingplatte auf dem Grundmodul zu fixieren und/oder zu verriegeln. Bevorzugt bildet das Grundmodul ein sogenanntes Nullpunktspannsystem und / oder Nullpunktverriegelungssystem zur positionsgenauen und / oder toleranzgenauen Aufnahme einer Dockingplatte aus.

Ein an einem Grundrahmen fix montiertes Grundmodul mit ein oder mehreren Nullpunktspannvorrichtungen und zumindest einer am Grundmodul tauschbaren bzw. lösbaren Dockingplatte kann zusammen ein "Dockingmodul" bilden.

Bevorzugt umfasst das Grundmodul eine Medienschnittstelle, wobei dem Grundmodul über die Medienschnittstelle ein Medium zuführbar ist, insbesondere Druckluft und/oder elektrische Signale und/oder Strom. Die Druckluft kann dazu dienen, um die an der Dockingplatte befindlichen Einzugspannbolzen am Grundmodul, insbesondere am Nullpunktsystem zu arretieren. Die Übertragung von Strom und / oder elektrischer Signale in das Grundmodul kann auch induktiv erfolgen.

Die Aufnahmen können Auflagen, Konsolen und/oder Spanner umfassen. Die Aufnahmen können insbesondere kraftfahrzeugtypspezifisch ausgebildet sein. Die Aufnahmen können als getrennte Bauteile ausgebildet sein und an der Dockingplatte befestigt, insbesondere lösbar und auswechselbar, befestigt sein.

Bevorzugt umfasst die Dockingplatte Halteelemente, beispielsweise Bolzen, Spannbolzen oder ähnliche Elemente, die dazu ausgebildet sind, dass die Dockingplatte mittels eines an den Haltelementen angreifenden Greifsystems an dem Grundmodul positioniert werden kann und/oder vom Grundmodul entfernt werden kann.

Die Vorrichtung umfasst erfindungsgemäß zumindest ein Greifsystem, insbesondere einen Roboter, wobei das Greifsystem dazu ausgebildet ist, die Dockingplatte an dem Grundmodul zu positionieren und/oder vom Grundmodul zu entfernen. Die Dockingplatte wird vom Greifsystem, insbesondere Roboter, aus einem Lager geholt um am Grundmodul angebracht zu werden und nach dem Entfernen vom Grundmodul vom Greifsystem in einem Lager abgestellt.

Bevorzugt umfasst die Vorrichtung zumindest eine weitere, vorzugsweise automatisiert austauschbare Dockingplatte, wobei die weitere Dockingplatte im selben Grundmodul positionsgenau fixierbar ist, in welchem die Dockingplatte fixierbar ist, wobei weitere Aufnahmen an der weiteren Dockingplatte ausgebildet sind und wobei die weiteren Aufnahmen der weiteren Dockingplatte verschieden von den Aufnahmen der Dockingplatte ausgebildet sind. In einem Grundmodul sind daher mindestens zwei verschieden ausgebildete Dockingplatten fixierbar. Die verschiedenen Dockingplatten können zur Herstellung verschiedener Fahrzeugtypen verwendet werden. Der Grundrahmen und die Grundmodule müssen dafür nicht getauscht werden.

Möglich ist auch, dass manche Dockingplatten keine Aufnahmen haben, da beispielsweise für die Produktion eines bestimmten Fahrzeugtyps an einem Grundrahmen der drei Grundmodule aufweist nur zwei mit Aufnahmen ausgestattete Dockingplatten erforderlich sind. Auf ein Grundmodul kann dann eine leere Dockingplatte bzw. eine Dockingplatte ohne Aufnahmen angedockt bzw. fixiert werden, beispielsweise zum Schutz bzw. zur Abdeckung der Spannvorrichtungen.

Vorzugsweise umfasst die Vorrichtung zumindest zwei, bevorzugt zumindest drei Grundmodule und zumindest zwei, bevorzugt zumindest drei, automatisiert austauschbare Dockingplatten, wobei die Dockingplatten in einem jeweiligen Grundmodul positionsgenau fixierbar oder fixiert sind, wobei an jeder Dockingplatte Aufnahmen ausgebildet sind. In einem Grundrahmen können somit mehrere Grundmodule zur gleichzeitigen Fixierung mehrerer Dockingplatten ausgebildet sein.

Abgesehen von einem automatisierten Austausch einer Dockingplatte kann eine Dockingplatte auch manuell austauschbar sein, beispielsweise durch Abheben der Dockingplatte mit einem manuell gesteuerten Manipulator bzw. Stapler.

Für das Positionieren von Kraftfahrzeugteilen zur Produktion von Kraftfahrzeugen eines ersten Kraftfahrzeugtyps und zur Produktion von Kraftfahrzeugen eines zweiten Kraftfahrzeugtyps, kann ein Grundmodul zur Produktion von Kraftfahrzeugen des ersten Kraftfahrzeugtyps automatisiert mit einer Dockingplatte ausgestattet werden, wobei an der Dockingplatte Aufnahmen ausgebildet sind, die dazu ausgebildet sind, Kraftfahrzeugteile eines Kraftfahrzeugs des ersten Kraftfahrzeugtyps zu halten, und kann das Grundmodul zur Produktion von Kraftfahrzeugen des zweiten Kraftfahrzeugtyps automatisiert mit einer weiteren Dockingplatte ausgestattet wird, wobei an der weiteren Dockingplatte weitere Aufnahmen ausgebildet sind, die dazu ausgebildet sind, Kraftfahrzeugteile eines Kraftfahrzeugs des zweiten Kraftfahrzeugtyps zu halten.

Zur Neukonfiguration einer erfindungsgemäßen Vorrichtung, zur Herstellung eines anderen Kraftfahrzeugtyps, können daher Grundrahmen und Grundmodule weiter verwendet werden und lediglich die eingespannten Dockingplatten mit ihren fahrzeugtypspezifischen Aufnahmen werden ausgetauscht.

In einem erfindungsgemäßen Verfahren wird die Dockingplatte zum Zuführen zu dem mit dem zumindest einen Grundmodul ausgestatteten Grundrahmen in der Konfigurationsstation mittels eines Greifsystems, insbesondere eines Roboters, aus einem Lager, insbesondere aus einem Regal, entnommen.

Der Raumbedarf für die Lagerhaltung wird deutlich reduziert, da nur die einzelnen Dockingplatten, inklusive typspezifischen Aufnahmen, im Regal abgelegt werden müssen und der tragende Grundrahmen für den nächsten Fahrzeugtyp nicht abgestellt bzw. getauscht werden muss, sondern nach beladen mit den für den nächsten Fahrzeugtyp passenden Dockingplatten sofort wieder verwendet werden kann.

Nach dem Ausstatten des Kraftfahrzeugteiles mit Anbauteilen kann das ausgestattete Kraftfahrzeugteil von der Dockingplatte abgenommen und danach der Grundrahmen, bevorzugt mit dem zumindest einem am Grundrahmen angeordneten Grundmodul, besonders bevorzugt mit der auf dem Grundmodul fixierten Dockingplatte, in eine Konfigurationsstation verbracht - zum Beispiel in die selbe Konfigurationsstation in welcher der Grundrahmen schon zuvor mit der Dockingplatte ausgestattet wurde. Alternativ oder vor dem Verbringen in eine Konfigurationsstation kann der Grundrahmen, mit oder ohne Grundmodul und Dockingplatte, in eine Lagerstation verbracht werden.

Nach einer Projektbeendigung müssen somit Grundrahmen nicht mehr verschrottet bzw. entsorgt werden, sondern können für das nächste Projekt bzw. den nächsten Fahrzeugtyp sofort wieder eingesetzt werden.

Zur Produktion von zwei Kraftfahrzeugen unterschiedlichen Kraftfahrzeugtyps können auf zwei, am selben Grundrahmen angeordneten Grundmodulen, zwei unterschiedliche Dockingplatten fixiert werden. Die unterschiedlichen Kraftfahrzeugtypen werden dann auf Stationen "in Serie zueinander" hergestellt.

Zur Produktion von zwei Kraftfahrzeugen unterschiedlichen Kraftfahrzeugtyps können auch auf zwei, an zwei unterschiedlichen Grundrahmen angeordneten Grundmodulen, zwei unterschiedliche Dockingplatten fixiert werden. Die unterschiedlichen Kraftfahrzeugtypen werden dann auf Stationen "parallel zueinander" hergestellt.

Erfindungsgemäß werden die Stellplätze für individuelle Dockingplatten im Lager, insbesondere Regal, in einer Speichereinheit hinterlegt. "Individuelle" Dockingplatte heißt, dass nicht nur die Information gespeichert wird, dass sich eine (beliebige) Dockingplatte an diesem Stellplatz befindet, sondern eine bestimmte Dockingplatte, mit bestimmten Eigenschaften und/oder mit einer eindeutigen Identifikationsnummer.

Erfindungsgemäß werden Kenngrößen, insbesondere Toleranzkenngrößen, für die individuellen Dockingplatten in der Speichereinheit hinterlegt.

Die Toleranzkenngrößen für individuelle Dockingplatten können aus Toleranzmessgrößen eines Grundrahmens mit einem Grundmodul und mit der individuellen Dockingplatte und aus Toleranzmessgrößen des Grundrahmens mit dem Grundmodul ohne der individuellen Dockingplatte berechnet werden. Hierdurch müssen Toleranzkenngrößen für die Dockingplatten nicht unmittelbar an den Dockingplatten gemessen werden, wodurch ein effizienterer Produktionsablauf bzw. geringere Taktzeiten erreichbar sein können.

Erfindungsgemäß steuert eine Steuereinheit das Greifsystem derart, dass, abhängig von den hinterlegten Messwerten und/oder von den hinterlegten Stellplätzen, eine individuelle Dockingplatte aus dem Regal entnommen wird, zum Zuführen zu dem mit dem zumindest einen Grundmodul ausgestatteten Grundrahmen in der Konfigurationsstation. Es kann insbesondere eine Dockingplatte entnommen und auf einen Grundrahmen aufgesetzt werden, dessen geometrische Abweichungen von einem Sollwert die Abweichungen des verwendeten Grundrahmens und/oder des verwendeten Grundmoduls kompensieren, so dass insgesamt geringere Abweichungen bzw. bessere Toleranzwerte für die Gesamtvorrichtung Grundrahmen inklusive Grundmodul inklusive Dockingplatte erreicht werden können.

Eine erfindungsgemäße Vorrichtung zur Produktion von Kraftfahrzeugen umfasst leann somit eine Vorrichtung zum Positionieren von Kraftfahrzeugteilen, wie oben beschrieben, und zusätzlich : ein Lager, in dem mehrere Dockingplatten bereitgehalten werden und ein Greifsystem, insbesondere einen Roboter, wobei das Greifsystem dazu ausgebildet ist, eine Dockingplatte aus einem Lager zu entnehmen und zu dem mit zumindest einem Grundmodul ausgestatteten Grundrahmen zuzuführen und die Dockingplatte auf dem Grundmodul zu fixieren.

Die Vorrichtung umfasst erfindungsgemäß auch eine Steuereinheit, wobei die Steuereinheit das Greifsystem derart steuert, dass, abhängig von hinterlegten Messwerten und/oder von hinterlegten Stellplätzen, insbesondere auf die oben näher beschriebene Weise, eine individuelle Dockingplatte aus dem Regal entnommen wird. Die individuelle Dockingplatte kann dann vom Greifsystem dem, mit dem zumindest einen Grundmodul ausgestatteten Grundrahmen zugeführt werden.

### Kurzbeschreibung der Zeichnungen

Die Erfindung wird im Folgenden beispielhaft unter Bezugnahme auf die Zeichnungen beschrieben.
- Fig. 1: ist eine dreidimensionale Darstellung einer Vorrichtung zur Produktion von Kraftfahrzeugen, umfassend eine Vorrichtung zum Positionieren von Kraftfahrzeugteilen für ein erfindungsgemäßes Verfahren.
- Fig. 2: ist eine dreidimensionale Darstellung eines Grundmoduls und einer Dockingplatte der Vorrichtung gemäß Fig. 1 von oben.
- Fig. 3: ist eine dreidimensionale Darstellung einer Dockingplatte der Vorrichtung gemäß Fig. 1 von unten, ohne Aufnahmen.
- Fig. 4: ist eine dreidimensionale Darstellung einer Dockingplatte der Vorrichtung gemäß Fig. 1 von unten, mit Aufnahmen.
- Fig. 5: ist eine Draufsicht auf einen Grundrahmen mit drei Grundmodulen der Vorrichtung gemäß Fig. 1.
- Fig. 6: ist eine schematische Darstellung eines erfindungsgemäßen Verfahrens zur Produktion von Kraftfahrzeugen.
- Fig. 7: ist eine schematische Darstellung von Teilaspekten eines erfindungsgemäßen Verfahrens zur Produktion von Kraftfahrzeugen.

### Detaillierte Beschreibung der Erfindung

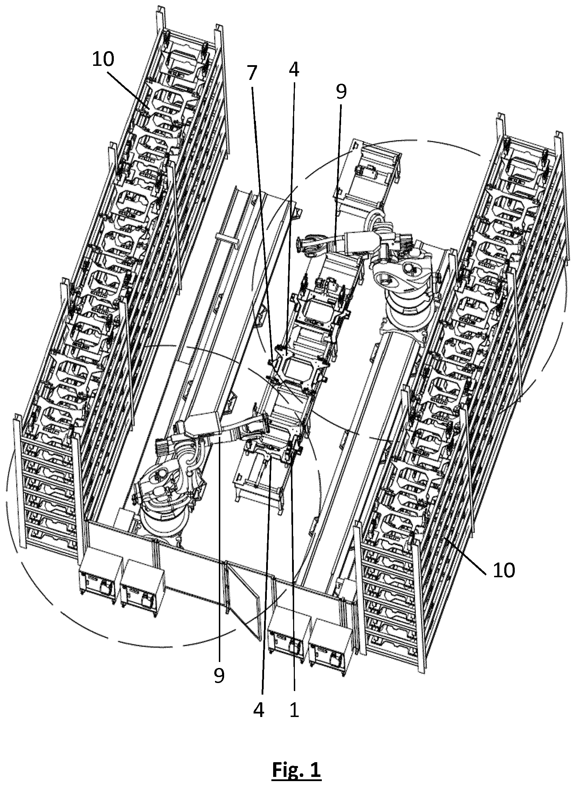

In Fig. 1 ist eine erfindungsgemäße Vorrichtung zur Produktion von Kraftfahrzeugen, umfassend eine Vorrichtung zum Positionieren von Kraftfahrzeugteilen, und somit auch eine Vorrichtung zum Positionieren von Kraftfahrzeugteilen für ein erfindungsgemäßes Verfahren zur Produktion von Kraftfahrzeugen dargestellt.

Die Kraftfahrzeugteile können auf Dockingplatten 4 positioniert werden, zur weiteren Bearbeitung, insbesondere zur Ausstattung mit zusätzlichen Komponenten des herzustellenden Kraftfahrzeuges.

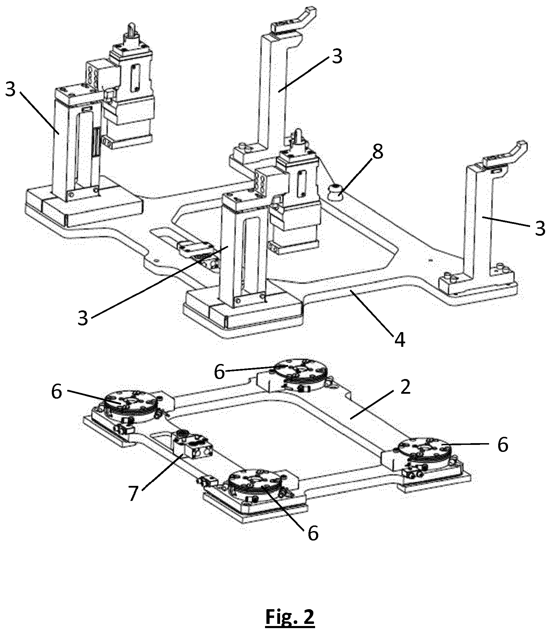

Mehrere Dockingplatten 4 können an einem gemeinsamen Grundrahmen 1, auf Grundmodulen 2 (dargestellt in Fig. 2), aufgenommen werden. Die Grundmodule 2 und die Dockingplatten 4 weisen eine flache Form auf. Von oben betrachtet weisen Grundmodule 2 und Dockingplatten 4 eine rechteckige oder quadratische Form auf. Insbesondere können Grundmodule 2 und Dockingplatten 4 im Wesentlichen einen rechteckigen oder quadratischen Rahmen bilden, wobei der Rahmen einer Dockingplatte 4 im Wesentlichen auf den Rahmen eines Grundmoduls 2 passt.

Die Dockingplatten 4 werden in einem Lager 10, insbesondere in einem oder mehreren Regalen, beispielsweise seitlich des Grundrahmens 1, bereitgehalten und können durch Greifsysteme 9, insbesondere an Robotern, aus ihrem Platz im Lager 10 entnommen und auf den Grundmodulen 2 positioniert werden, zur Bereitstellung geeigneter Aufnahmen 3 (dargestellt in Fig. 2) zur Herstellung eines bestimmten Fahrzeugtyps.

Die Vorrichtung umfasst somit einen Grundrahmen 1, mehrere am Grundrahmen 1 angeordnete Grundmodule 2, sowie automatisiert austauschbare Dockingplatten 4, wobei die Dockingplatten 4 in den Grundmodulen 2 positionsgenau fixiert werden können. Bevorzugt weisen alle Grundmodule 2 und alle Dockingplatten 4 die selben Dimensionen auf, so dass alle Dockingplatten 4 beliebig auf allen Grundmodulen 2 fixiert werden können.

Wie in Fig. 2 dargestellt, sind an den Dockingplatten jeweils mehrere, beispielsweise jeweils vier Aufnahmen 3 ausgebildet, um mittels der Aufnahmen 3 Kraftfahrzeugteile in einer vorgegebenen Position halten zu können. Die Aufnahmen 3 können Auflagen, Konsolen und/oder Spanner und / oder ein-/ausziehbare Positionierstifte umfassen.

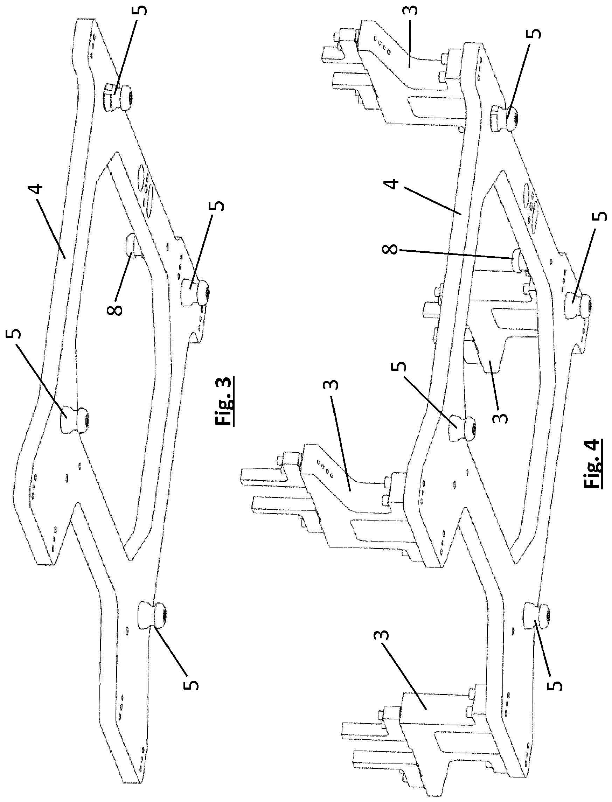

Wie in Fig. 3 und Fig. 4 gut ersichtlich, weist eine Dockingplatte 4 an ihrer Unterseite Bolzen 5 auf, insbesondere jeweils vier Einzugsspannbolzen, sodass die Dockingplatte 4 mittels der Bolzen 5 in einem Grundmodul 2 positionsgenau fixiert werden kann.

Ein Grundmodul 2 weist daher, wie in Fig. 2 dargestellt, vier entsprechend positionierte Spannvorrichtungen 6 auf, insbesondere Nullpunktspannvorrichtungen, die dazu ausgebildet sind, die Bolzen 5, insbesondere Einzugsspannbolzen, einer Dockingplatte 4 einzuspannen. Das Grundmodul 2 bildet hierdurch bevorzugt ein Nullpunktspannsystem aus.

Ein Grundmodul 2 kann eine Medienschnittstelle 7 umfassen, wobei dem Grundmodul 2 über die Medienschnittstelle 7 ein Medium zuführbar ist, insbesondere Druckluft und/oder elektrische Signale und/oder Strom. Die Druckluft kann beispielsweise dazu dienen, um an der Dockingplatte 4 befindliche Einzugspannbolzen 5 mittels Spannvorrichtungen 6, vorzugsweise Nullpunktspannvorrichtungen, am Nullpunktsystem bzw. am Grundmodul 2 zu arretieren.

Eine Dockingplatte 4 umfasst auch Halteelemente 8, beispielsweise wieder Bolzen, Spannbolzen, oder dergleichen, wobei die Halteelemente vorzugsweise an der Oberseite der Dockingplatten 4 angeordnet sind. Die Halteelemente 8 sind dazu ausgebildet, dass die Dockingplatten 4 mittels eines an den Haltelementen 8 angreifenden Greifsystems 9 (Fig. 1) an dem Grundmodul 2 positioniert werden können und/oder vom Grundmodul 2 entfernt werden können.

Zur wahlweisen Konfiguration einer solchen Vorrichtung für das Positionieren von Kraftfahrzeugteilen zur Produktion von Kraftfahrzeugen eines ersten Kraftfahrzeugtyps, wird ein Grundmodul 2 automatisiert, bevorzugt mittels Greifsystem 9, mit einer Dockingplatte 4 ausgestattet, wobei an der Dockingplatte 4 Aufnahmen 3 ausgebildet sind, die dazu ausgebildet sind, Kraftfahrzeugteile eines Kraftfahrzeugs des ersten Kraftfahrzeugtyps zu halten.

Zur wahlweisen Konfiguration einer solchen Vorrichtung für das Positionieren von Kraftfahrzeugteilen zur Produktion von Kraftfahrzeugen eines zweiten Kraftfahrzeugtyps, wird das Grundmodul 2 automatisiert, bevorzugt mittels Greifsystem 9, mit einer weiteren, also anderen Dockingplatte 4 ausgestattet, wobei an der weiteren Dockingplatte 4 weitere Aufnahmen 3 ausgebildet sind, die dazu ausgebildet sind, Kraftfahrzeugteile eines Kraftfahrzeugs des zweiten Kraftfahrzeugtyps zu halten. Die weiteren Aufnahmen 3 sind also zumindest teilweise verschieden von den Aufnahmen 3, so dass nur andere Kraftfahrzeugteile bzw. Kraftfahrzeugteile auf andere Weise positioniert werden können, um einen anderen Kraftfahrzeugtyp herzustellen.

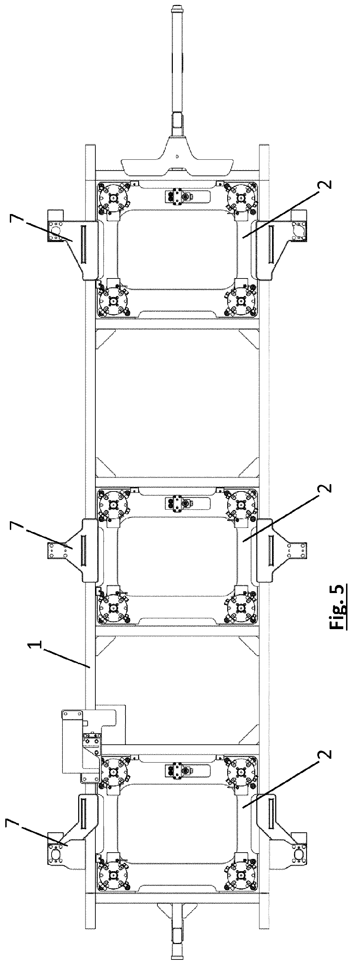

Fig. 5 zeigt eine Draufsicht auf einen Grundrahmen 1 mit drei Grundmodulen 2 der Vorrichtung gemäß Fig. 1. Der Grundrahmen 1 dient somit zur Aufnahme von drei Dockingplatten 4. Jedes Grundmodul 2 umfasst eine Medienschnittstelle 7.

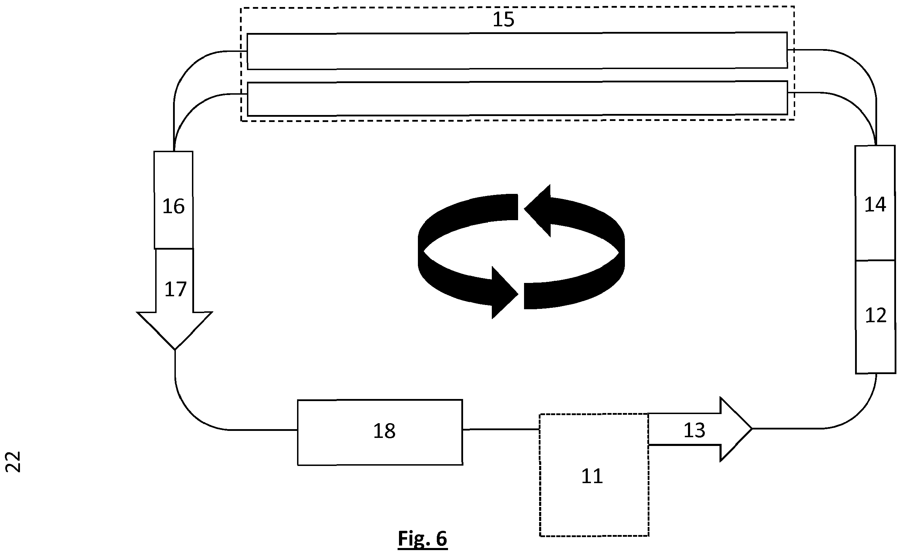

Fig. 6 ist eine schematische Darstellung eines erfindungsgemäßen Verfahrens zur Produktion von Kraftfahrzeugen.

In einer Konfigurationsstation 11, die beispielsweise zumindest die Ausstattungen wie in Fig. 1 abgebildet aufweist, werden Dockingplatten 4 zu Grundrahmen 1 zugestellt, wobei die Grundrahmen 1 einem mit zumindest einem Grundmodul 2 ausgestattet sind und die Dockingplatten 4 auf den jeweiligen Grundmodulen 2 fixiert. In den Konfigurationsstationen 11 können somit Typänderungen für die Herstellung eines anderen Fahrzeugtyps vorgenommen werden. Nach der Konfigurationsstation 11 ist somit der Typ des Kraftfahrzeuges definiert 13. In den Konfigurationsstationen 11 können auch die Grundrahmen 1 und/oder die Grundmodule 2 und/oder die Dockingplatten 4 geparkt bzw. gelagert sein und Messungen, insbesondere Toleranzmessungen, in der Konfigurationsstation 11 durchgeführt werden.

In einer Arbeitsstation 12 kann ein Kraftfahrzeugteil, insbesondere Karosserieteil, auf die Dockingplatte 4 aufgesetzt werden, so dass das Kraftfahrzeugteil durch die Aufnahmen 3 der Dockingplatte 4 gehalten wird.

Daraufhin kann die Produktion des bestimmten Kraftfahrzeugtyps durchgeführt werden, es kommt somit zum Produktionsstart 14.

In der Arbeitsstation 12 kann das Kraftfahrzeugteil mit Anbauteilen ausgestattet werden.

Durch unterschiedliche Konfiguration mit Dockingplatten 4 kann eine Produktion von zumindest zwei unterschiedlichen Kraftfahrzeugtypen 15 stattfinden.

Nach dem Ausstatten des Kraftfahrzeugteiles mit Anbauteilen wird das ausgestattete Kraftfahrzeugteil von der Dockingplatte 4 abgenommen. Es kann ein neues Kraftfahrzeugteil zur Bestückung mit Anbauteilen auf die Dockingplatte 4 aufgesetzt werden.

Nach dem Ende des Rohbaus 16 kann der Grundrahmen ohne Kraftfahrzeugteil 17, insbesondere ein Grundrahmen 1 mit Grundmodulen 2 und mit auf den Grundmodulen 2 fixierten Dockingplatten 4, wieder in die Konfigurationsstation 11 verbracht werden oder in eine Lagerstation 18 bzw. einen Puffer verbracht werden. Von der Lagerstation 18 kann der Grundrahmen 1 später wieder in die Konfigurationsstation 11 gebracht werden.

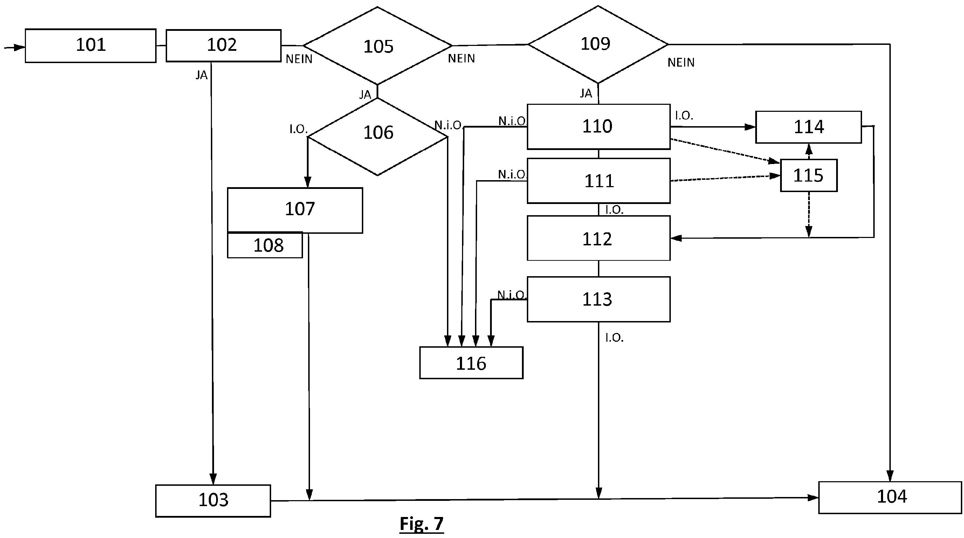

Fig. 7 ist eine schematische Darstellung von Teilaspekten eines erfindungsgemäßen Verfahrens zur Produktion von Kraftfahrzeugen, nämlich in Hinblick auf die Vermessung von Grundrahmen 1, Grundmodul 2 und Dockingplatten 4, inklusive Aufnahmen 3, zur Auswahl und Entnahme der jeweilig optimalen Dockingplatte 4 aus dem Regal, nämlich einem intelligenten Registerregal, um das Kraftfahrzeugteil mit möglichst geringer Positionsabweichung und noch innerhalb der erlaubten Toleranz für den Produktionsablauf positionieren zu können.

Der Ablauf beginnt damit, dass ein Grundrahmen 1 aus einer Lagerstation 18 gesteuert wird, 101, also aus einer Warteposition ausgesteuert wird.

Der zentrale Teil des Vermessungsverfahrens startet mit der Entscheidung 109, ob eine Umpalettierung notwendig ist, also der Grundrahmen 1 mit einer neuen Dockingplatte 4 ausgestattet werden soll.

Wenn dies der Fall ist, dann erfolgt bei 110 eine Eingangsmessung der Aufnahmen "IST", also eine Vermessung des Ist-Zustandes von Grundrahmen 1, Dockingplatten 2 und noch am Grundrahmen 1 befindlicher Dockinplatte(n) 4, inklusive deren Aufnahmen 3.

Ist der Zustand der Dockingplatten 4 und deren Aufnahmen 3 in Ordnung (i.O.), so kommt es zur Ablage Lagerplatz, Schritt 114. Dabei werden die Dockinplatte(n) 4 vom Grundrahmen 1 bzw. vom Grundmodul 2 abgenommen und in einen leeren Lagerplatz, insbesondere leeren Regalplatz gelegt. Von dort können die Dockingplatten später für eine Umpalettierung, 112, also zur Befestigung an einem anderen Grundrahmen 1 verwendet werden.

Nach der Eingangsmessung der Aufnahmen "IST", 110, erfolgt eine Eingangsmessung Grundmodul zu Grundrahmen "IST", bei 111, das heißt eine Vermessung von Grundrahmen 1 und der einen oder mehreren mit dem Grundrahmen 1 fix verbundenen Grundmodule 2 sowie deren Abweichung zu Referenzpunkten am Grundrahmen 1, also eine Vermessung ohne Dockingplatten 4.

Das Kästchen 115 stellt eine SPS (speicherprogrammierbare Steuerung) zur Steuerung des Vermessungsablaufes dar und die gestrichelten Pfeile von 110 und 111 zur SPS 115 stellen die Übermittlung der gewonnenen Messdaten an die SPS dar.

Von der SPS erfolgt eine Errechnung der Ist-Abweichung der abgedockten Dockingplatte 4 an den Aufnahmen 3 in Relation zum Grundmodul 2 am Grundrahmen 1. Da die Dockingplatte zur Verbesserung der Taktzeiten in keinem "Master Grundrahmen" in der Konfigurationsstation vermessen werden kann, wird die Toleranz bevorzugt über das Dockingmodul/Grundmodul 2 am Grundrahmen 1 zurückgerechnet.

Die Messdaten der Dockingplatte 4 werden über die SPS-Steuerung auf dem jeweilig zugewiesenen Lagerplatz der Dockingplatte(n) 4 im Regal (Registerregal) gespeichert.

Der Pfeil von Kästchen 115 senkrecht nach unten symbolisiert, dass alternativ parallel zum direkten Schritt von 111, Eingangsmessung Grundmodul zu Grundrahmen "IST", zu 112, Umpalettierung, falls die Messeregebnisse in Ordnung waren, eine "Best fit" Toleranzberechnung und Dockingplattenauswahl aus dem jeweiligen Regalplatz erfolgen kann.

Die toleranztechnisch am besten passende(n) Dockingplatte(n) für den bereits vermessenen und nun anstehenden Grundrahmen 1, aus allen im Regal vorhandenen Dockingplatten 4, werden errechnet.

Bei 112 kommt es schließlich zur Umpalettierung bzw. Typänderung der Dockingplatte 4: Roboter greifen die rechnerisch ermittelte(n), am besten passende(n) Dockinplatte(n) 4 aus dem jeweiligem Lagerplatz im Registerregal. Danach erfolgt das Aufdocken/Aufpalettieren der neuen Dockingplatte 4 auf den Grundrahmen 1 bzw. auf das/die Grundmodul(e) 2.

Bei 113 erfolgt eine Ausgangsmessung Aufnahmen "IST", also eine Vermessung der Aufnahmen 3, vorzugsweise an den Spannstellen, auf der/den gerade aufgedockten Dockingplatte(n) - bevorzugt auf den Spannern/Auflagen/Konsolen etc., welche beispielsweise eine Karosse, einen Fahrzeugboden bzw. das kundenspezifische Bauteil des neuen Typs aufnehmen.

Der Messwert aus der Messung gemäß Punkt 113 wird mit einem zulässigen, im System definierten Toleranzwert verglichen. Ist der neue Messwert bzw. der neue Toleranzwert nicht in Ordnung (N. i. O), so erfolgt ein Ausschleusen des Grundrahmens 1 für eine Messtechnik 116, also zur Wartung, Instandhaltung, Meßtechnik oder einer sonstigen genaueren Überprüfung.

Sofern die Toleranzwerte eingehalten werden (i.O), darf der nun mit den neuen Dockingplatten 4 ausgestattete Grundrahmen 1 in die Produktionsanlage, nämlich eine Arbeitsstation 12, einfahren. 104 stellt das Einschleusen in die Arbeitsstation dar.

Im Ablaufschema, Fig. 7, ist zusätzlich, ab Kästchen 105 nach unten, noch eine Vermessung dargestellt, die optional durchgeführt werden kann. Die Teile der Vorrichtung, insbesondere Dockingplatten 4, können auch dann vermessen werden, wenn keine Umpalettierung bzw. kein Aufdocken einer neuen Dockingplatte 4 erfolgen muss, sondern auch unabhängig davon, nämlich immer dann wenn ein Grundrahmen 1 eine vordefinierte Anzahl an Produktionsumläufen hinter sich hat. Es handelt sich um ein zusätzliches Überprüfungskriterium bzw. einen zusätzlichen Auslöser für eine Vermessung bzw. Qualitätskontrolle der Vorrichtungsteile.

105 stellt die Überprüfung dar, ob eine Vermessung laut Umlaufzahl notwendig ist. Ist das nicht der Fall so erfolgt entweder eine Vermessung auf Grund Umpalettierung, 109, wie zuvor beschrieben, oder der Grundrahmen 1 kann nach einer Parkposition 102 und eventuell nach einer bestimmten Verweilzeit 103 wieder in eine Arbeitsstation 12 eingeschleust werden, 104.

Ist gemäß 105 eine Vermessung durchzuführen, dann erfolgt eine Eingangsmessung der Aufnahmen "IST", 106, ähnlich zu Schritt 110. Sind die Messwerte in Ordnung (i.O.), so erfolgt eine Messdatenspeicherung jeweils separat für Dockingplatten 4 und / oder Gesamtverbau 1, 2, 4 im Schritt 107. Der Gesamtverbau kann dann wieder eingeschleust werden, 108, zur Produktion in der Arbeitsstation, 104.

Sind die gemessenen Toleranzen im Schritt 106 nicht in Ordnung, so erfolgt ein Ausschleusen des bestückten Grundrahmens 1 für die Messtechnik 116, also wieder zur Wartung, Instandhaltung, Meßtechnik oder einer sonstigen genaueren Überprüfung, so wie es auch erfolgt, wenn eine der Prüfungen 110, 111 und 113 ein nicht akzeptables Ergebnis liefert.
- 1: Grundrahmen
- 2: Grundmodul
- 3: Aufnahme
- 4: Dockingplatte
- 5: Bolzen
- 6: Spannvorrichtung
- 7: Medienschnittstelle
- 8: Haltelement
- 9: Greifsystem
- 10: Lager, Regal
- 11: Konfigurationsstation
- 12: Arbeitsstation
- 13: Typ des Kraftfahrzeuges definiert
- 14: Produktionsstart
- 15: Produktion von zumindest zwei unterschiedlichen Kraftfahrzeugtypen
- 16: Rohbau Ende
- 17: Grundrahmen ohne Kraftfahrzeugteil
- 18: Lagerstation
- 101: Grundrahmen wird aus Lagerstation gesteuert
- 102: Parkposition
- 103: Verweilzeit
- 104: Einschleusen in die Arbeitsstation
- 105: Vermessung laut Umlaufzahl notwendig
- 106: Eingangsmessung Aufnahmen "IST"
- 107: Messdatenspeicherung jeweils separat für Dockingplatten und Gesamtverbau
- 108: Einschleusen
- 109: Umpalettierung notwendig
- 110: Eingangsmessung Aufnahmen "IST"
- 111: Eingangsmessung Grundmodul zu Grundrahmen "IST"
- 112: Umpalettierung Typänderung
- 113: Ausgangsmessung Aufnahmen "IST"
- 114: Ablage Lagerplatz
- 115: SPS
- 116: Aussschleusen für Messtechnik

## Patentansprüche

1. Verfahren zur Produktion von Kraftfahrzeugen mit Hilfe einer Vorrichtung zum Positionieren von Kraftfahrzeugteilen, umfassend einen Grundrahmen (1), zumindest ein am Grundrahmen (1) angeordnetes Grundmodul (2), sowie Aufnahmen (3), die dazu ausgebildet sind, die Kraftfahrzeugteile zu halten, wobei die Vorrichtung zumindest eine austauschbare Dockingplatte (4) umfasst, wobei die Dockingplatte (4) im Grundmodul (2) fixierbar ist, wobei die Aufnahmen (3) an der Dockingplatte (4) ausgebildet sind, umfassend die Schritte:
- Zuführen einer Dockingplatte (4) zu einem mit zumindest einem Grundmodul (2) ausgestatteten Grundrahmen (1) und Fixieren der Dockingplatte (4) auf dem Grundmodul (2) in einer Konfigurationsstation (11),
- Aufsetzen eines Kraftfahrzeugteiles auf die Dockingplatte (4), so dass das Kraftfahrzeugteil durch die Aufnahmen (3) der Dockingplatte (4) gehalten wird in einer Arbeitsstation (12) und
- Ausstatten des Kraftfahrzeugteiles mit Anbauteilen, wobei die Dockingplatte (4) zum Zuführen zu dem mit dem zumindest einen Grundmodul (2) ausgestatteten Grundrahmen (1) in der Konfigurationsstation mittels eines Greifsystems (9), insbesondere eines Roboters, aus einem Lager (10), insbesondere einem Regal, entnommen wird, wobei die Stellplätze für individuelle Dockingplatten (4) im Lager (10) in einer Speichereinheit hinterlegt werden, **dadurch gekennzeichnet, dass** Kenngrößen, insbesondere Toleranzkenngrößen, für individuelle Dockingplatten (4) in einer Speichereinheit hinterlegt werden, wobei eine Steuereinheit das Greifsystem (9) derart steuert, dass, abhängig von den hinterlegten Messwerten und/oder von den hinterlegten Stellplätzen, eine individuelle Dockingplatte (4) aus dem Lager (10) entnommen wird, zum Zuführen zu dem mit dem zumindest einen Grundmodul (2) ausgestatteten Grundrahmen (1) in der Konfigurationsstation.

2. Verfahren nach Anspruch 1,
**dadurch gekennzeichnet , dass** die Toleranzkenngrößen für individuelle Dockingplatten (4) aus Toleranzmessgrößen eines Grundrahmens (1) mit einem Grundmodul (2) und mit der individuellen Dockingplatte (4) und aus Toleranzmessgrößen des Grundrahmens (1) mit dem Grundmodul (2) ohne der individuellen Dockingplatte (4) berechnet werden.

3. Verfahren nach zumindest einem der vorhergehenden Ansprüche, **dadurch gekennzeichnet , dass** nach dem Ausstatten des Kraftfahrzeugteiles mit Anbauteilen das ausgestattete Kraftfahrzeugteil von der Dockingplatte (4) abgenommen wird und danach der Grundrahmen (1), bevorzugt mit dem zumindest einem am Grundrahmen (1) angeordneten Grundmodul (2), besonders bevorzugt mit der auf dem Grundmodul (2) fixierten Dockingplatte (4), in eine Konfigurationsstation verbracht wird oder in eine Lagerstation verbracht wird.

4. Verfahren nach zumindest einem der vorhergehenden Ansprüche, **dadurch gekennzeichnet , dass** zur Produktion von zwei Kraftfahrzeugen unterschiedlichen Kraftfahrzeugtyps auf zwei am selben Grundrahmen (1) angeordneten Grundmodulen (2) zwei unterschiedliche Dockingplatten (4) fixiert werden.

5. Verfahren nach zumindest einem der vorhergehenden Ansprüche, **dadurch gekennzeichnet , dass** zur Produktion von zwei Kraftfahrzeugen unterschiedlichen Kraftfahrzeugtyps auf zwei an zwei unterschiedlichen Grundrahmen (1) angeordneten Grundmodulen (2) zwei unterschiedliche Dockingplatten (4) fixiert werden.

6. Vorrichtung zur Produktion von Kraftfahrzeugen, umfassend eine Vorrichtung zum Positionieren von Kraftfahrzeugteilen, wobei die Vorrichtung zum Positionieren von Kraftfahrzeugteilen umfasst: einen Grundrahmen (1), zumindest ein am Grundrahmen (1) angeordnetes Grundmodul (2), sowie Aufnahmen (3), die dazu ausgebildet sind, die Kraftfahrzeugteile zu halten, wobei die Vorrichtung zumindest eine austauschbare Dockingplatte (4) umfasst, wobei die Dockingplatte (4) im Grundmodul (2) fixierbar ist, wobei die Aufnahmen (3) an der Dockingplatte (4) ausgebildet sind, wobei die Vorrichtung zur Produktion von Kraftfahrzeugen ferner umfasst:
- ein Lager (10), in dem mehrere Dockingplatten (4) bereitgehalten werden,
- ein Greifsystem (9), insbesondere ein Roboter, wobei das Greifsystem (9) dazu ausgebildet ist, eine Dockingplatte (4) aus einem Lager (10) zu entnehmen und zu dem mit zumindest einem Grundmodul (2) ausgestatteten Grundrahmen (1) zuzuführen und die Dockingplatte (4) auf dem Grundmodul (2) zu fixieren, **dadurch gekennzeichnet, dass** die Vorrichtung eine Steuereinheit umfasst, wobei die Steuereinheit das Greifsystem (9) derart steuert, dass, abhängig von hinterlegten Messwerten und/oder von hinterlegten Stellplätzen, eine individuelle Dockingplatte (4) aus dem Regal entnommen wird, zum Zuführen zu dem mit dem zumindest einen Grundmodul (2) ausgestatteten Grundrahmen (1).

## Claims

1. Method for producing motor vehicles by means of a device for positioning motor vehicle parts, comprising a base frame (1), at least one base module (2) arranged on the base frame (1), and mounts (3) which are configured to hold the motor vehicle parts, wherein the device comprises at least one exchangeable docking plate (4), wherein the docking plate (4) can be fixed in the base module (2), wherein the mounts (3) are configured on the docking plate (4), comprising the steps:
- supplying a docking plate (4) to a base frame (1) equipped with at least one base module (2) and fixing the docking plate (4) to the base module (2) in a configuration station (11),
- fitting a motor vehicle part to the docking plate (4), such that the motor vehicle part is held by the mounts (3) of the docking plate (4), in a work station (12), and
- equipping the motor vehicle part with add-on parts, wherein the docking plate (4), for supply to the base frame (1) equipped with the at least one base module (2) in the configuration station, is removed from a store (10), in particular a rack, by means of a gripping system (9), in particular a robot, wherein the storage positions for individual docking plates (4) in the store (10) are recorded in a memory unit, **characterized in that** characteristic values, in particular characteristic tolerance values, for individual docking plates (4) are recorded in a memory unit, wherein a control unit controls the gripping system (9) in such a manner that, in dependence on the recorded measured values and/or on the recorded storage positions, an individual docking plate (4) is removed from the store (10) for supply to the base frame (1) equipped with the at least one base module (2) in the configuration station.

2. Method according to Claim 1,
**characterized in that** the characteristic tolerance values for individual docking plates (4) are calculated from measured tolerance values of a base frame (1) with a base module (2) and with the individual docking plate (4) and from measured tolerance values of the base frame (1) with the base module (2) without the individual docking plate (4).

3. Method according to at least one of the preceding claims,
**characterized in that**, after the motor vehicle part has been equipped with add-on parts, the equipped motor vehicle part is removed from the docking plate (4), and then the base frame (1), preferably with the at least one base module (2) arranged on the base frame (1), particularly preferably with the docking plate (4) fixed to the base module (2), is transported to a configuration station or transported to a storage station.

4. Method according to at least one of the preceding claims,
**characterized in that**, for the production of two motor vehicles of different motor vehicle type, two different docking plates (4) are fixed to two base modules (2) arranged on the same base frame (1).

5. Method according to at least one of the preceding claims,
**characterized in that**, for the production of two motor vehicles of different motor vehicle type, two different docking plates (4) are fixed to two base modules (2) arranged on two different base frames (1).

6. Device for producing motor vehicles, comprising a device for positioning motor vehicle parts, wherein the device for positioning motor vehicle parts comprises: a base frame (1), at least one base module (2) arranged on the base frame (1), and mounts (3) which are configured to hold the motor vehicle parts, wherein the device comprises at least one exchangeable docking plate (4), wherein the docking plate (4) can be fixed in the base module (2), wherein the mounts (3) are configured on the docking plate (4), wherein the device for producing motor vehicles further comprises:
- a store (10) in which multiple docking plates (4) are held ready,
- a gripping system (9), in particular a robot, wherein the gripping system (9) is configured to remove a docking plate (4) from a store (10) and supply it to the base frame (1) equipped with at least one base module (2), and to fix the docking plate (4) to the base module (2), **characterized in that** the device comprises a control unit, wherein the control unit controls the gripping system (9) in such a manner that, in dependence on recorded measured values and/or on recorded storage positions, an individual docking plate (4) is removed from the rack for supply to the base frame (1) equipped with the at least one base module (2).

## Revendications

1. Procédé de fabrication de véhicules automobiles à l'aide d'un dispositif de positionnement de pièces de véhicules automobiles, comportant un cadre de base (1), au moins un module de base (2) disposé sur le cadre de base (1), ainsi que des logements (3), qui sont réalisés pour retenir les pièces de véhicules automobiles, le dispositif comportant au moins une plaque d'arrimage (4) remplaçable, la plaque d'arrimage (4) pouvant être fixée dans le module de base (2), les logements (3) étant réalisés sur la plaque d'arrimage (4), comportant les étapes suivantes :
- acheminement d'une plaque d'arrimage (4) jusqu'à un cadre de base (1) équipé d'au moins un module de base (2) et fixation de la plaque d'arrimage (4) sur le module de base (2) dans une station de configuration (11),
- placement d'une pièce de véhicule automobile sur la plaque d'arrimage (4), de telle sorte que la pièce de véhicule automobile soit retenue au moyen des logements (3) de la plaque d'arrimage (4) dans une station de travail (12) et
- équipement de la pièce de véhicule automobile avec des pièces rapportées, la plaque d'arrimage (4), pour l'acheminement jusqu'au cadre de base (1) équipé de l'au moins un module de base (2) dans la station de configuration, étant prélevée d'un lieu de stockage (10), en particulier d'un rayonnage, au moyen d'un système de préhension (9), en particulier d'un robot, les emplacements des plaques d'arrimage (4) individuelles dans le lieu de stockage (10) étant enregistrés dans une unité mémoire, **caractérisé en ce que** des grandeurs caractéristiques, en particulier des grandeurs caractéristiques de tolérance pour des plaques d'arrimage (4) individuelles sont enregistrées dans une unité mémoire, une unité de commande commandant le système de préhension (9) de telle sorte qu'en fonction des valeurs mesurées enregistrées et/ou des emplacements enregistrés, une plaque d'arrimage (4) individuelle est prélevée du lieu de stockage (10), pour l'acheminement jusqu'au cadre de base (1) équipé de l'au moins un module de base (2) dans la station de configuration.

2. Procédé selon la revendication 1,
**caractérisé en ce que** les grandeurs caractéristiques de tolérance pour des plaques d'arrimage (4) individuelles sont calculées à partir de grandeurs mesurées de tolérance d'un cadre de base (1) doté d'un module de base (2) et doté de la plaque d'arrimage (4) individuelle et à partir de grandeurs mesurées de tolérance du cadre de base (1) doté du module de base (2) sans la plaque d'arrimage (4) individuelle.

3. Procédé selon au moins l'une des revendications précédentes,
**caractérisé en ce qu'**après l'équipement de la pièce de véhicule automobile avec des pièces rapportées, la pièce de véhicule automobile équipée est enlevée de la plaque d'arrimage (4) et ensuite le cadre de base (1), de préférence doté de l'au moins un module de base (2) disposé sur le cadre de base (1), de manière particulièrement préférée doté de la plaque d'arrimage (4) fixée sur le module de base (2), est amené dans une station de configuration ou est amené dans une station de stockage.

4. Procédé selon au moins l'une des revendications précédentes,
**caractérisé en ce que**, pour la fabrication de deux véhicules automobiles de différents types de véhicules automobiles, deux plaques d'arrimage (4) différentes sont fixées sur deux modules de base (2) disposés sur le même cadre de base (1).

5. Procédé selon au moins l'une des revendications précédentes,
**caractérisé en ce que**, pour la fabrication de deux véhicules automobiles de différents types de véhicules automobiles, deux plaques d'arrimage (4) différentes sont fixées sur deux modules de base (2) disposés sur deux cadres de base (1) différents.

6. Dispositif de fabrication de véhicules automobiles, comportant un dispositif de positionnement de pièces de véhicules automobiles, le dispositif de positionnement de pièces de véhicules automobiles comportant : un cadre de base (1), au moins un module de base (2) disposé sur le cadre de base (1), ainsi que des logements (3), qui sont réalisés pour retenir les pièces de véhicules automobiles, le dispositif comportant au moins une plaque d'arrimage (4) remplaçable, la plaque d'arrimage (4) pouvant être fixée dans le module de base (2), les logements (3) étant réalisés sur la plaque d'arrimage (4), le dispositif de fabrication de véhicules automobiles comportant en outre :
- un lieu de stockage (10), dans lequel plusieurs plaques d'arrimage (4) sont tenues prêtes,
- un système de préhension (9), en particulier un robot, le système de préhension (9) étant réalisé pour prélever une plaque d'arrimage (4) d'un lieu de stockage (10) et pour l'acheminer jusqu'au cadre de base (1) équipé de l'au moins un module de base (2) et pour fixer la plaque d'arrimage (4) sur le module de base (2), **caractérisé en ce que** le dispositif comporte une unité de commande, l'unité de commande commandant le système de préhension (9) de telle sorte qu'en fonction de valeurs mesurées enregistrées et/ou d'emplacements enregistrés, une plaque d'arrimage (4) individuelle est prélevée du rayonnage, pour l'acheminement jusqu'au cadre de base (1) équipé de l'au moins un module de base (2).
